# EUROPEAN PATENT APPLICATION

(11) **EP 3 267 028 A1**
(43) Date of publication of application: **10.01.2018**
(21) Application number: 16178119.0
(22) Date of filing: 06.07.2016
(51) Int. Cl.: F02M 63/00, F02M 21/02, F02M 61/08

(54) **VALVE ASSEMBLY FOR AN INJECTION VALVE, INJECTION VALVE AND INJECTION METHOD**

(71) Applicant: Continental Automotive GmbH, 30165 Hannover (DE)
(72) Inventor: Filippi, Stefano, 57014 Castel' Anselmo Collesalvetti (IT); Grandi, Mauro, 57128 Livorno (IT); Polidori, Valerio, 57128 Livorno (IT)

(57) **Abstract**

The present invention refers to a valve assembly (2) for an injection valve (1), in particular for an injection valve (1) for injecting CNG, the valve assembly (2) comprising: a housing (3) providing a fluid inlet (4) and a fluid outlet (5) and a fluid path (6) extending between the fluid inlet (4) and the fluid outlet (5), a needle (7) within the housing (3) wherein the needle (7) is movable along a longitudinal axis (L) of the valve assembly (2), a first valve seat (10) and a first valve closing part (9), wherein the first closing part (9) is movable by the needle (7) between a closing position where the first valve closing part (9) is in contact to the first valve seat (10) for closing the fluid path (6) in between and an opening position where the first valve closing part (9) is spaced apart from the first valve seat (10) for opening the fluid path (6) in between. In order to improve such valve assembly (2) the invention suggests that the valve assembly (2) comprises a second valve seat (13) and a second valve closing part (12), wherein the second valve closing part is movable by the needle (7) between a closing position where the second valve closing part (12) is in contact to the second valve seat (13) for closing the fluid path (6) in between and an opening position where the second valve closing part (12) is spaced apart from the second valve seat (13) for opening the fluid path (6) in between. The Invention also refers to an injection valve (1) comprising a valve assembly (2) according to the invention.

## Description

### Technical Field

The present invention relates to a valve assembly for an injection valve, in particular for an injection valve for injecting CNG, the valve assembly comprising:
- a housing providing a fluid inlet and a fluid outlet and a fluid path extending between the fluid inlet and the fluid outlet,
- a needle within the housing wherein the needle is movable along a longitudinal axis of the valve assembly,
- a first valve seat and a first valve closing part, wherein the first closing part is movable by the needle between a closing position where the first valve closing part is in contact to the first valve seat for closing the fluid path in between and an opening position where the first valve closing part is spaced apart from the first valve seat for opening the fluid path in between.

The invention also relates to an injection valve, in particular an injection valve for injecting compressed natural gas (CNG), comprising a valve assembly.

The present invention also relates to a method for injecting compressed natural gas (CNG).

### Background Art

Injection valves are in wide spread use, in particular for combustion engines where they may be arranged in order to dose a fluid, in particular compressed natural gas (CNG).

An actual CNG-architecture design of injection valves comprises a passive outward valve that is connected to an active inward CNG-injector. When the solenoid of the injection valve is not activated the inward injector has also the function to seal the gas in a preferred area of the injector where the engine temperature influences have less impact in order to use special rubber embodiment designs to block a gas leakage. In such an injection valve the passive valve opens when the right pressure is realized into the adjacent volume. Accordingly it suffers of environmental conditions (in particular the temperature of the valve) considering the physical properties of a gas with a potential risk regarding the guarantee to dose the right quantity of mass flow into a cylinder if the differences of engine conditions (transience, steady state, change of speed) are considered.

In the past an injection valve has been designed comprising an outward injector directly commanded by a piezo actuator unit. Such known injection valve however is not appropriate for CNG-application (CNG = compressed natural gas). The piezo injector is a classical outward opening application where the flow is controlled by the nozzle geometries and the lift generated when energy is applied to the actuator. However, the physics of a piezo stack element to be used for this specific topic has the limitation of a maximum stroke in the range of 50 microns. Although this is sufficient to cover all gasoline's mass flow requirements, this is a strong limitation for a potential CNG-application due to the maximum pressure (for safety reason) of about 20 - 25 bar and the specific gravimetry of the gas that requires a stroke in the range of 300 - 350 microns to get the mass flow for the engine. In addition, the known injection valve of the piezo design comprises a sealing concept according to metal contact at the tip of the injector that is the most common way used concept for gasoline's considering the physical properties of the fluid. CNG-application increases the tip temperature due to the nature of the gas as well as the stress of the contact bodies for sealing due to the relative low damping that can be realized in gas condition. In order to overcome the disadvantage of the small stroke of a piezo actuator, as a technical variation a different outward flow design with a solenoid direct actuator concept was also proposed. However, the same disadvantages of the sealing concept on the tip of the injector were still present.

### Summary of Invention

It is an object of the invention to provide an improved valve assembly, in particular for injection of compressed natural gas (CNG), and to provide an improved injection valve. Further, it is an object of the invention to provide an improved method for injection of compressed natural gas (CNG). In particular, an object of the invention is that by the improvement the known disadvantageous limitations are removed as far as possible.

In order to achieve the object, the present invention provides a valve assembly of the above mentioned generic type wherein the valve assembly comprises a second valve seat and a second valve closing part, wherein the second closing part is movable by the needle between a closing position where the second valve closing part is in contact to the second valve seat for closing the fluid path in between and an opening position where the second valve closing part is spaced apart from the second valve seat for opening the fluid path in between. Accordingly, the first valve closing part and the second valve closing part both can be directly driven to its respective opening position by the actuator unit if the actuator unit is energized. Accordingly, the invention can provide a direct command of the complete valve assembly by an actuator unit without comprising a passive valve. By omitting a passive valve the safety of the sealing function of the gas away from the tip for CNG-application can be improved because the above described problems of a passive valve cannot arise. Further, because a second valve closing part is provided away from the first closing part at a preferred position it is possible to arrange the second valve closing part away from the tip of the injection valve in order to be less exposed to or even protected by the housing of the injection valve against changing environmental conditions, like in particular changing temperatures. A degradation of the functionality due to high temperatures effect over livetime can be avoided or at least minimized. Further, the invention enables to dose the fuel quantity by direct command of the valve, in particular on using a solenoid principle.

The present invention may preferably be applied to future direct CNG applications with the advantage of a direct actuation of the valve sections integrated. It enables a safety sealing function with a control of a mass (fluid) flow, for example on using a flow calibration ring (which may be also named calibration flow ring) for application purpose, preferably with the function also of a hard stop.

There are many possibilities for performing preferred modifications:
It is considered to be appropriate that the valve assembly comprises a first valve section including the first valve closing part and the first valve seat wherein the first valve section is of the outward opening type and/or that the valve assembly comprises a second valve section including the second valve closing part and the second valve seat wherein the second valve section is of the outward opening type. Alternatively, the first valve section may be of the inward opening type and/or the second valve section may be of the inward opening type.
It is preferred, that the valve assembly comprises a spring, in particular a pre-compressed spring, wherein the spring directly or indirectly applies a force to the needle towards the closing position of the first valve closing part and towards the closing position of the second valve closing part.

In an embodiment it is preferred, that the valve assembly comprises an actuator unit, wherein the actuator unit when being energized directly or indirectly applies a force to the needle away from the closing position of the first valve closing part and away from the closing position of the second valve closing part. Preferably the actuator unit comprises a solenoid. As an alternative, the actuator unit may comprise a piezo element or a stack of piezo elements. In particular the actuator unit is adapted to provide a stroke of the needle in a range of 300 - 350 microns.

It is possible that the first valve closing part and the first valve seat are provided at the fluid outlet of the valve assembly or are provided closer to the fluid outlet compared to the second valve closing part and the second valve seat.

It is preferred, that the first valve seat is a surface surrounding an orifice at an axial end of the housing at the fluid outlet and that the first valve closing part is formed at or connected to the needle, wherein the first valve closing part is in particular formed at a pintle, in particular at an axial end of the pintle, which is connected to the needle. Preferably the mentioned axial end of the housing is opposite to an opposite axial end of the housing which is at or close to the fluid inlet.

It is preferred, that the second valve closing part is connected to the needle or is part of the needle. The connection may be a direct connection or an indirect connection which can include one or more interconnected parts. The connection may be capable to avoid any axial relative movement of the second valve closing part relative to the needle. For example the connection may include a press-fit and/or a weld. The same may also apply to the connection between the first valve closing part and the needle.

It is preferred, that the second valve closing part is located within the housing and is axially spaced apart from the first valve closing part, wherein the spring is in particular disposed axially between the first valve closing part and the second valve closing part. For example an axial distance between the first valve closing part and the second valve closing part may be in the magnitude of some millimeters or some centimeters so that the second valve closing part can be disposed sufficiently away from the fluid outlet of the housing, the first valve closing part and the first valve seat in order to be less exposed to or even protected against changing environmental conditions and against heating up of the first valve closing part.

A preferred embodiment is characterized in that the valve assembly comprises a spring washer which is fixed at the needle or which is integrally formed at the needle and that the spring is mounted pre-compressed between a shoulder which is formed at an inside of the housing and the spring washer. In an advantageous embodiment the spring washer may include or consist of metal or the like. Preferably the spring washer may be a ring-shaped element which may be fixed at the needle so that no relative axial movement is possible between the spring washer and the needle. The fixation for example may include a press-fit and/or a weld.

In an embodiment it is provided that the spring washer forms the second valve closing part or that a sealing, in particular a sealing ring, is mounted at the spring washer, in particular at a front face of the spring washer, wherein the sealing forms the second valve closing part. In an advantageous embodiment the sealing may be deformable elastically. It for example may include or consist of rubber or the like.

In a preferred embodiment the valve assembly comprises a flow calibration ring which is fixed at an inside of the housing or which is part of the housing, wherein the flow calibration ring surrounds the needle at its circumference by tracing a defined flow gap in between. In an advantageous embodiment the flow calibration ring may include or consist of metal or the like. Preferably the flow calibration ring may be fixed at the housing so that no relative axial movement is possible between the housing and the flow calibration ring. The flow calibration ring may have the function to control the mass flow by the design of its internal hole according to the respective application requirements.

Further, the invention suggests as a preferred embodiment that a front face of the flow calibration ring forms the second valve seat or that a sealing, in particular a sealing ring, is mounted at the flow calibration ring, in particular at a front face of the flow calibration ring, wherein the sealing provides the second valve seat. The aforementioned possibilities provide a number of possible alternative embodiments. For example, it is possible that the sealing function between the second valve closing part and the second valve seat can be realized between two metal surfaces of the spring washer and of the flow calibration ring, where one of these elements is blocked on the movable needle. As an alternative, the second valve closing part or the second valve seat can be provided by an elastic sealing wherein the other element can for example include or consist of metal.

In a preferred embodiment it is possible that the valve assembly comprises an elastic member, in particular a ring including or consisting of rubber or the like,
- wherein either the elastic member is connected to an inside of the housing and provides a front face which is facing a front face of a part formed at or connected to the needle,
- or wherein the elastic member is connected to the needle and provides a front face which is facing a front face of the inside of the housing or a front face of a part connected to an inside of the housing
and that in the opening position of the second valve closing part an axial distance between said both front faces is smaller compared to a minimal axial distance between the second valve closing part and the second valve seat. Preferably, the elastic member may include or consist of rubber or the like. The elastic member may be squeezed by the other facing front face and may be used for supporting an anti-bounce-mechanism for damping a final closing back motion of the needle; in this case the sealing can be realized as a metal to metal contact between the flow calibration ring and the spring washer.

It is preferred, that the valve assembly comprises a stopping part which is formed at or fixed at the needle at an axial side of the spring opposite to the spring washer, wherein the stopping part and the flow calibration ring if in contact to each other together act as an axial stop. The stopping part may be fixed at the needle so that no relative axial movement is possible between the needle and the stopping part. The fixation may include a press-fit and/or a weld. In a preferred embodiment the flow calibration ring may also have the function of a hard stop to limit the lift in combination with the stopping part when the actuator is activated.

It is preferred, that the flow calibration ring or the stopping part has one or more radial slots to support flow continuity of a flowing gas.

In a first alternative it is possible that the solenoid actuator comprises or acts together with an armature, which is connected to an armature pin, wherein an axial end of the armature pin is adjacent to and uncoupled - i.e. in particular axially displaceable away - from an axial end of the needle and is pressed against the axial end of the needle by the actuator unit when the actuator unit is energized. The actuator, if realized with a classical armature pin, can be activated by the solenoid when an electrical current is applied to the coil. The armature pin realizes a magnetic force in the direction to push down on the needle and opens the valve in the outward direction. The outward embodiment element may comprise the needle and a pintle welded together at a sub-assembly step, whereupon this new body can be introduced into the valve from the bottom side. The spring washer may be assembled from the top into the valve to pro-press the valve spring and to realize the force to close the valve considering the operative pressure range of the application. This assembly operation may be supported by a press fit process to engage the spring washer to the needle with a preferred load higher than 20 times of the spring calibration force in order to set for a stable position. The spring washer may also be blocked on the needle, for example by press fit. Preferably at its upper side it may comprise or it may be connected to a ring rubber element (for example similar to an 0-ring) to seal on a flat area of a secondary part, for example a flow calibration ring. The flow calibration ring (which could be also named calibration flow ring) preferably may have an axial-symmetrical shape with a center hole. The center hole may be calibrated to control together with the needle diameter the mass flow of the gas, with a preferred tolerance of 5 microns, which for example may be realized by a grinding process. This enables a high accuracy for the application and part-to-part variability control. The flow calibration ring may be arranged at the valve during assembly operation, for example by a press fit process and/or by a safety weld. A preferred position of the flow calibration ring at the needle is such that the sealing, which preferably is a rubber element consisting of a rubber qualified for gas, is squeezed in range of 40-80 microns when the first and second valve closing parts are in its respective closing position. This is preferred to avoid a leakage at the lower side of the injector.

In an alternative embodiment, the rubber element could only have the function to damp a final closing motion of the needle; in this case the seal can be arranged between two flat surfaces of the flow calibration ring (could also be named calibration flow ring) and the spring washer. In a further possible embodiment, without the damping function of the rubber, a spring washer without the rubber element can be fixed on the needle (for example by press-fit and structured welding to assure more stability) . Also in this case the internal injector (valve section) maybe realized by metal to metal contact.

The afore-mentioned stopping part, which preferably may be a stop ring, may be blocked on the needle and may be introduced on top (i.e. in a direction towards the flow inlet) of the flow calibration ring in order to limit the final lift which preferably may be in a range of 300-350 microns, according the respective application. This operation can be done for example with a press-fit operation on the needle and/or a safety structural weld. For gas flow continuity the stopping ring may be designed with radial slots to support the flow downstream (i.e. in a direction towards the flow outlet) through the flow calibration ring and the valve. As an alternative, radial slots may be formed into the flow calibration ring. The distance between the armature and the magnetic pole (axial gap) may be set-up during the assembly operation, considering the lift set and the squeeze associated to the sealing, for example in a range of 500 microns. The housing may include a number of housing parts which may be connected, for example, by welding. For example the housing may comprise the magnetic pole of the actuator and may also comprise an adapter tube (magnetic-pole-adapter-tube) adjacent to the magnetic pole in a direction towards the flow inlet, and a continuous weld between the magnetic pole and the adapter tube may close the fuel path and avoid external leakages of the gas. Between further parts of the housing additional continuous weldings may be provided in order to close the fuel path and avoid external leakages of the gas.

During a closing event of the valve assembly both the rubber and associated squeeze may reduce the final speed of the needle. This effect and/or a decoupling mechanism regarding the needle and the armature pin can reduce or even eliminate uncontrolled bounce after closing.

Regarding the solenoid actuator in a second alternative it is preferred, that the solenoid actuator comprises or acts together with an armature which is coupled to the needle, in particular by a form-fit and/or force-fit connection. The armature may be blocked on the needle to actuate the valve, preferably in the outward direction.

It is preferred, that in its opening position the first valve closing part and the first valve seat determine a first minimal axial distance and in its opening position the second valve closing part and the second valve seat determine a second minimal axial distance, wherein the first minimal axial distance and the second minimal axial distance have the same extension or wherein the second minimal axial distance is smaller compared to the first minimal axial distance. The second alternative is especially preferred for an embodiment of the valve assembly which comprises a sealing ring for providing the second sealing part. The sum of an axial compression of the sealing ring and the second minimal axial distance may for example have the same extension compared to the first minimal axial distance.

Further, an injection valve is specified according to a further aspect of the present disclosure. The injection valve is in particular an injection valve for injecting CNG. It comprises a valve assembly according to the present disclosure.

Furthermore, another aspect of the present disclosure provides a method, comprising the steps:
- providing an injection valve according to the present invention and
- injecting compressed natural gas (CNG) by the injection valve into a device, in particular into a cylinder of a combustion engine.

### Brief Description of Drawings

The invention will now be described by way of example with reference to the accompanying drawings. These are as follows:
Fig. 1 is a schematic longitudinal sectional view of an inventive injection valve including an inventive valve assembly according to a respective preferred embodiment,
Fig. 1a is an enlarged view of detail I shown in Fig. 1 and
Fig. 2 is a schematic longitudinal sectional view of an inventive injection valve including an inventive valve assembly according to a respective second preferred embodiment.

### Description of Embodiments

In the figures corresponding or similar elements appearing in different illustration are identified by the same reference numbers.

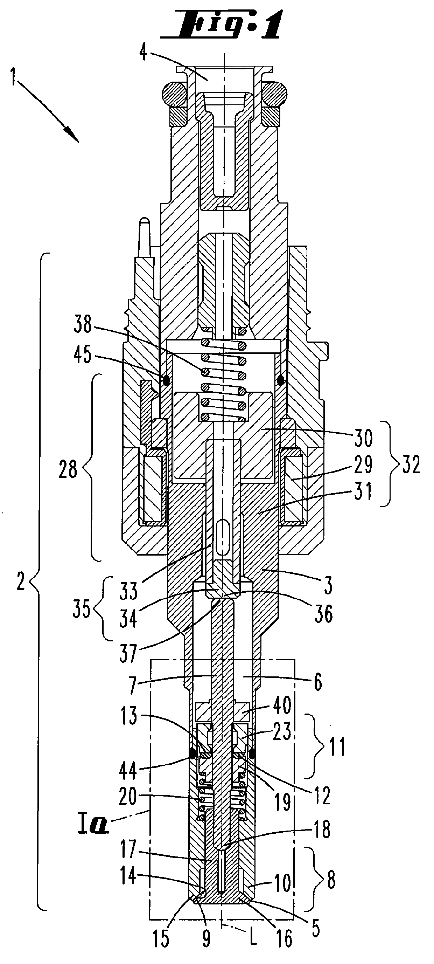

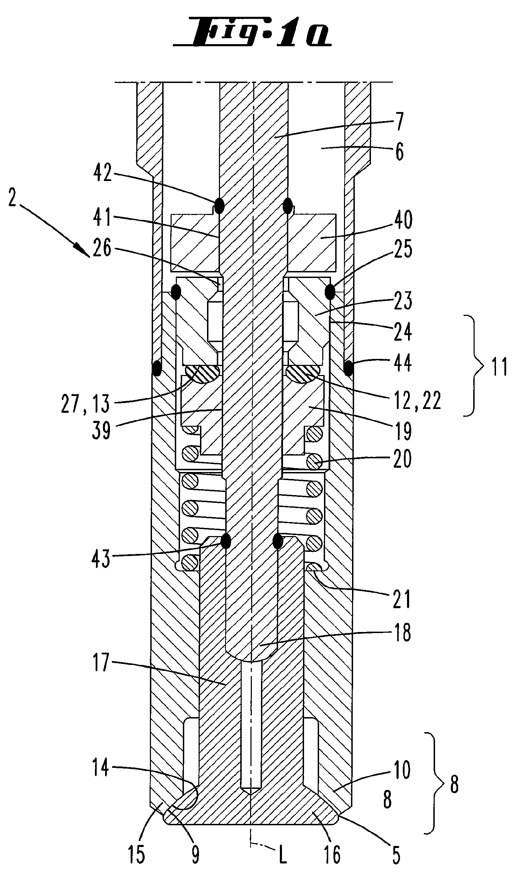

With reference to figures 1, 1a it is described by way of example a first preferred embodiment of an injection valve 1 according to the invention comprising a first preferred embodiment of a valve assembly 2 according to the present invention. The shown embodiment preferably can be used for injecting a gas, in particular for injecting compressed natural gas (CNG). The valve assembly 2 comprises a housing 3 which is providing a fluid inlet 4 and a fluid outlet 5 and a fluid path 6 extending there between. As shown by the figures the housing 3 comprises a number of housing components. Welds for connection are indicated schematically by black symbols. As will be clear from the following description, figures 1 and 1a depict the injection valve 1 in an operational state where the fluid path 6 is closed. The valve assembly 2 comprises a needle 7 which is moveable along a longitudinal axis L. Valve assembly 2 comprises a first valve section 8 and a second valve section 11. The first valve section 8 includes a first valve closing part 9 and a first valve seat 10. The second valve section 11 includes a second valve closing part 12 and a second valve seat 13. The term valve seat is used in a general meaning for any part or one- or two-dimensional surface which is acting together with a valve closing part to selectively open or close the fluid path in between by moving the valve closing part away from or toward the valve seat. The first valve closing part 9 and the first valve seat 10 are disposed at the fluid outlet 5. In more detail the first valve seat 10 comprises a surface 14 of the housing 3 which surrounds an orifice at an axial end 15 of the housing 3 at the fluid outlet 5. The first valve closing part 9 is integrally formed at a free axial end 16 of a pintle 17 which is connected to the needle 7 at a free axial end 18 of the needle which is directed toward the fluid outlet 5. Accordingly, the first valve closing part 9 is fixed to the needle 7. Accordingly, if the injection valve 1 is mounted at a cylinder of a combustion engine (not shown by the figures) the first valve section 8 is located in a region which is exposed considerably to environmental conditions, in particular temperature, which can change significantly during operation. Differing therefrom the second valve closing part 12 and the second valve seat 13 are located in a region away from the first valve section and inside the housing 3 so that the second valve closing part 12 and the second valve seat 13 are less exposed to environmental conditions, in particular to changing temperatures. In the example the second closing part 12 is fixed to the needle 7 at a position which is axially spaced apart from the first valve closing part 9 in an axial direction directed away from the fluid outlet 5 and directed toward the fluid inlet 4. In the exemplary embodiment the second valve closing part 12 is formed by a ring-like sealing 22 which is fixed (for example sticked) to a front face of a spring washer 19 which is fixed on the needle 7 so that no relative axial movement is possible between the needle 7 and the spring washer 19. Accordingly, the second valve closing part 12 is fixed to the needle 7 by the spring washer 19. The valve assembly 2 comprises a helical spring 20 which is mounted in a pre-compressed state axially between the first valve closing part 9 and the second valve closing part 12 provided by the sealing 22 which in the example consists of rubber. The needle 7 is passed through the spring 20 wherein the spring 20 is axially clamped between a shoulder 21 formed at an inside of the housing 3 and the spring washer 19. In the shown example the valve assembly 2 comprises a flow calibration ring 23 which is fixed to an inside of the housing 3 by means of a press fit 24 and a safety weld 25 so that no relative axial movement is possible between the housing and the flow calibration ring. The flow calibration ring 23 surrounds the needle 7 at its circumference by tracing a defined flow gap 26 there between. In the embodiment the second valve seat 13 comprises a front face 27 which is provided by the flow calibration ring 23.

From the above description it is clear that the first valve section 8 and the second valve section 11 both are of the outward opening type and that the spring 20 applies a force to the needle 7 for moving the first valve closing part 9 as well as the second valve closing part 12 towards its respective closing position where the valve closing part 9 is in sealing contact to the first valve seat 10 and where the second valve closing part 12 is in sealing contact to the second valve seat 13. This situation is shown by figures 1a and 1b. In such state the fluid path 6 is closed by the first valve section 8 and by the second valve section 11 which are both directly operated by the needle 7.

The valve assembly 2 comprises an actuator unit 28 which for itself is known by a skilled person. The actuator unit 28 comprises a coil 29 which is fixed at the housing 3. Further, the actuator unit 28 includes an armature 30 which is guided axially moveable inside the housing 3. The housing 3 comprises a magnetic pole 31. The coil 29, the armature 30 and the magnetic pole 31 are components of a solenoid 32. The armature 30 is connected to an armature-pin 35 which in the example includes a tube 33 inserted in a hole of the armature 30 and a plug 34 which is inserted into the tube 33 at its free axial end. A free axial end 36 of the plug 34 is adjacent to and uncoupled from a facing axial end 37 of the needle 7 and is pressed against this axial end 37 by the actuator unit 28 when the actuator unit 28 is energized by electric current in order to move the first valve closing part 9 and the second valve closing part 12 to its respective opening position by means of the needle 7. The valve assembly 2 includes a calibration spring 38 which is axially clamped in a pre-compressed state between the housing 3 and the armature 30.

If after energizing the solenoid 32 the electric current is switched off the axial force of the spring 20 is stronger than the axial force of the spring 38. The needle 7 is axially moved at first until a position where the second valve closing part 12 comes into contact to the second valve seat 13 and thereafter is axially moved further for squeezing the elastic sealing 22 until the first valve closing part 9 is in sealing contact to the first valve seat 10. If the actuator unit 9 is activated by energizing the coil 29 by electric current, attracting magnetic forces are generated between the armature 30 and the magnetic pole 31 in axial direction. The axial force of the calibration spring 38 and the axial magnetic attracting forces together exceed the axial force of the spring 20 so that the needle 7 is moved in the opposite direction which results in that the first valve closing part 9 is moved away from the first valve seat 10 to its opening position and that the second valve closing part 12 is moved away from the second valve seat 13 towards its opening position, too. In the example the spring washer 19 is fixed on the needle 7 by means of a press fit 39.

In the shown embodiment the valve assembly 2 comprises a stopping part 40 which is axially fixed at the needle 7 at an axial side of the spring 20 which axial side is opposite to the spring washer 19. The fixation of the stopping part 40 at the needle 7 is achieved by means of a press fit 41 and a weld 42 in the example. The stopping part 40 and the flow calibration ring 23 act together as an axial stop when in contact to each other in order to limit the maximum lift of the needle 7.

As described above, in the embodiment of figures 1, 1a the elastic sealing 22 provides the second valve closing part 12. The figures illustrate both valve closing parts 9, 12 in its respective closing position and that in this state the elastic sealing 22 of the second valve closing part 12 is elastically squeezed. Accordingly, it is clear that in its respective opening position the first valve closing part 9 and the first valve seat 10 determine a first minimal axial distance between them, that in the opening position the second valve closing part 12 and the second valve seat 13 determine a second minimal axial distance between them and that the second minimal axial distance is smaller compared to the first minimal axial distance.

In the example the pintle 17 is axially fixed at the needle 7 by a weld 43. Further, welds 44 and 45 are provided for fixing and for tightening components of the housing 3 to each other.

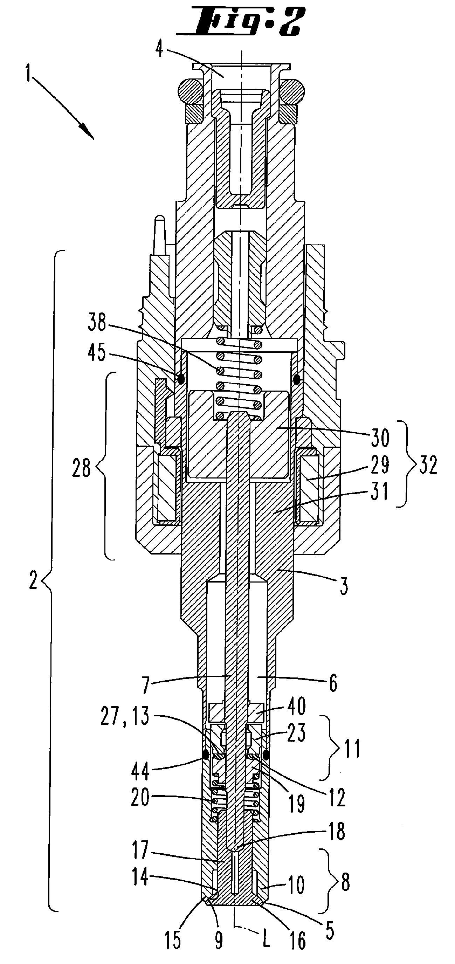

A second preferred embodiment of an injection valve 1 including a valve assembly 2 according to the present invention is shown by figure 2. Corresponding components are indicated by the reference numbers already used in figures 1 and 1a. The second embodiment is different from the first one in that its armature 30 is directly coupled to the needle 7.

All disclosed features are (for its own, but also in combination) relevant for the invention. The features of the dependent claims characterize also independent inventive improvements of the prior art, in particular for filing divisional applications on a basis of these claims.

## Claims

1. A valve assembly (2) for an injection valve (1), in particular for an injection valve (1) for injecting CNG, the valve assembly (2) comprising:
- a housing (3) providing a fluid inlet (4) and a fluid outlet (5) and a fluid path (6) extending between the fluid inlet (4) and the fluid outlet (5),
- a needle (7) within the housing (3) wherein the needle (7) is movable along a longitudinal axis (L) of the valve assembly (2),
- a first valve seat (10) and a first valve closing part (9), wherein the first closing part (9) is movable by the needle (7) between a closing position where the first valve closing part (9) is in contact to the first valve seat (10) for closing the fluid path (6) in between and an opening position where the first valve closing part (9) is spaced apart from the first valve seat (10) for opening the fluid path (6) in between,
**characterized in that**
the valve assembly (2) comprises a second valve seat (13) and a second valve closing part (12), wherein the second valve closing part (12) is movable by the needle (7) between a closing position where the second valve closing part (12) is in contact to the second valve seat (13) for closing the fluid path (6) in between and an opening position where the second valve closing part (12) is spaced apart from the second valve seat (13) for opening the fluid path (6)in between.

2. Valve assembly (2) according to the preceding claim, **characterized in that** the valve assembly (2) comprises a first valve section (8) including the first valve closing part (9) and the first valve seat (10) wherein the first valve section (8) is of the outward opening type and/or that the valve assembly (2) comprises a second valve section (11) including the second valve closing part (12) and the second valve seat (13) wherein the second valve section (11) is of the outward opening type.

3. Valve assembly (2) according to any of the preceding claims, **characterized**
**in that** the valve assembly comprises a spring (20), in particular a pre-compressed spring (20), wherein the spring (20) directly or indirectly applies a force to the needle (7) towards the closing position of the first valve closing part (9) and towards the closing position of the second valve closing part (12) and/or
**in that** the valve assembly (2) comprises an actuator unit (28), wherein the actuator unit (28) when being energized directly or indirectly applies a force to the needle (7) in an axial direction away from the closing position of the first valve closing part (9) and away from the closing position of the second valve closing part (12).

4. Valve assembly (2) according to any of the preceding claims, **characterized in that** the first valve closing part (9) and the first valve seat (10) are provided at the fluid outlet (5) of the valve assembly (2) or are provided closer to the fluid outlet (5) compared to the second valve closing part (12) and the second valve seat (13).

5. Valve assembly (2) according to any of the preceding claims, **characterized**
**in that** the first valve seat (10) comprises a surface (14) surrounding an orifice at an axial end (15) of the housing (3) at the fluid outlet (5) and that the first valve closing part (9) is formed at or connected to the needle (7), wherein the first valve closing part (9) is in particular formed at a pintle (17), in particular at an axial end (16) of the pintle (17), which is connected to the needle (7)
and/or
**in that** the second valve closing part (12) is connected to the needle (7) or is part of the needle (7).

6. Valve assembly (2) according to any of the preceding claims, **characterized in that** the second valve closing part (12) is located within the housing (3) and is axially spaced apart from the first valve closing part (9), wherein the spring (20) is in particular disposed axially between the first valve closing part (9) and the second valve closing part (12).

7. Valve assembly (2) according to claim 3 or to claim 6, **characterized**
**in that** the valve assembly (2) comprises a spring washer (19) which is fixed at the needle (7) or which is integrally formed at the needle (7) and that the spring (20) is mounted pre-compressed between a shoulder (21) which is formed at an inside of the housing (3) and the spring washer (19)
and/or
**in that** the valve assembly (2) comprises a flow calibration ring (23) which is fixed at an inside of the housing (3) or which is part of the housing (3), wherein the flow calibration ring (23) surrounds the needle (7) at its circumference by tracing a flow gap (26) in between

8. Valve assembly (2) according to the preceding claim, **characterized**
**in that** the spring washer (19) forms the second valve closing part (12) or that a sealing (22), in particular a sealing ring, is mounted at the spring washer (19), in particular at a front face of the spring washer (19), wherein the sealing (22) forms the second valve closing part (12)
and/or
**in that** a front face (27) of the flow calibration ring (23) forms the second valve seat (13) or that a sealing (22), in particular a sealing ring, is mounted at the flow calibration ring (23), in particular at a front face of the flow calibration ring (23), wherein the sealing (22) provides the second valve seat (13).

9. Valve assembly (2) according to any of the preceding claims, **characterized in that** the valve assembly (2) comprises an elastic member, in particular a ring including or consisting of rubber or the like,
- wherein either the elastic member is connected to an inside of the housing (3) and provides a front face which is facing a front face of a part formed at or connected to the needle (7),
- or wherein the elastic member is connected to the needle (7) and provides a front face which is facing a front face of the inside of the housing (3) or a front face of a part connected to an inside of the housing (3),
and that in the opening position of the second valve closing part (12) an axial distance between said both front faces is smaller compared to a minimal axial distance between the second valve closing part (12) and the second valve seat (13).

10. Valve assembly (2) according to claim 7 or claim 8, **characterized in that** the valve assembly (2) comprises a stopping part (40) which is formed at or fixed at the needle (7) at an axial side of the spring (20) opposite to the spring washer (19), wherein the stopping part (40) and the flow calibration ring (23) if in contact to each other together act as an axial stop.

11. Valve assembly (2) according to any of the preceding claims, **characterized in that** the flow calibration ring (23) and/or the stopping part (40) has one or more radial slots to support flow continuity of a flowing gas.

12. Valve assembly (2) according to one of the preceding claims, further comprising an armature (30) which is coupled to the needle (7) by form-fit and/or force-fit.

13. Valve assembly (2) according to one of the preceding claims 1 to 11, further comprising an armature (30), which is connected to an armature pin (35), wherein an axial end (36) of the armature pin (35) is adjacent to and uncoupled from an axial end (37) of the needle (7) and is pressed against the axial end (37) of the needle (7) by the actuator unit (28) when the actuator unit (28) is energized.

14. Valve assembly (2) according to any of the preceding claims, **characterized in that** in its opening position the first valve closing part (9) and the first valve seat (10) determine a first minimal axial distance and in its opening position the second valve closing part (12) and the second valve seat (13) determine a second minimal axial distance, wherein the first minimal axial distance and the second minimal axial distance have the same extension or wherein the second minimal axial distance is smaller compared to the first minimal axial distance.

15. Injection valve (1), in particular injection valve (1) for injecting CNG, comprising a valve assembly (2) according to any one of the preceding claims.
